# EUROPÄISCHE PATENTSCHRIFT

(11) **EP 0 946 602 B1**
(45) Veröffentlichungstag und Bekanntmachung des Hinweises auf die Patenterteilung: **13.03.2002**
(21) Anmeldenummer: 97954751.0
(22) Anmeldetag: 23.12.1997
(51) Int. Cl.: C08F 6/22, B01F 5/16

(54) **VERFAHREN ZUR KONTINUIERLICHEN KOAGULATION VON WÄSSRIGEN PFROPFKAUTSCHUKDISPERSIONEN UND VORRICHTUNG DAFÜR**
METHOD AND DEVICE FOR THE CONTINUOUS COAGULATION OF AQUEOUS DISPERSIONS OF GRAFT RUBBERS
PROCEDE ET DISPOSITIFS POUR LA COAGULATION EN CONTINU DE DISPERSIONS AQUEUSES DE CAOUTCHOUCS GREFFES

(30) Priorität: 23.12.1996 DE 19654169
(43) Veröffentlichungstag der Anmeldung: 06.10.1999
(73) Patentinhaber: BASF AKTIENGESELLSCHAFT, 67056 Ludwigshafen (DE)
(72) Erfinder: GÜNTHERBERG, Norbert, D-67346 Speyer (DE); HOFMANN, Jürgen, D-67069 Ludwigshafen (DE)
(74) Vertreter: Kinzebach, Werner, Dr.
(86) Internationale Anmeldenummer: EP9707261
(87) Internationale Veröffentlichungsnummer: WO9828344

(56) Entgegenhaltungen:
- EP-A- 0 344 399
- DE-A- 3 617 720
- US-A- 2 619 330
- US-A- 4 299 952
- US-A- 4 831 116

## Beschreibung

Die Erfindung betrifft ein Verfahren zur kontinuierlichen Koagulation von wässrigen Pfropfkautschukdispersionen in einer Vorrichtung mit mindestens einer Stator/Rotor-Kombination als Scherelement sowie eine Vorrichtung dafür.

Es ist bekannt, die Schlagzähigkeit von harten thermoplastischen Polymeren durch Vermischen mit Pfropfkautschuken zu erhöhen. Die resultierenden Polymergemische spielen z.B. als ABS- oder ASA-Polymere eine bedeutende industrielle Rolle in der Herstellung von technischen Kunststoffartikeln. Solche Pfropfkautschuke, die zur Schlagzähmodifizierung von harten Thermoplasten dienen, sind als sogenannte Schlagzäh-Modifier in der Kunststoffindustrie lange bekannt. Es handelt sich bei ihnen um Pfropfcopolymerisate, bei denen auf weiche Teilchenkerne aus Kautschuken (P1) wie aus elastomeren Dien-Polymeren oder elastomeren Acrylat-Polymeren eine Teilchenhülle (P2) von harte Thermoplaste bildenden Monomeren aufgepfropft wird. Die Herstellung der Pfropfhülle oder Pfropfschale (P2) erfolgt durch Polymerisation oder Copolymerisation von die harte Pfropfhülle (P2) bildenden Monomeren oder Monomerenmischungen in Substanz, Lösung, Suspension oder Emulsion in Gegenwart des oder der weichen Elastomeren (P1). Bevorzugt ist, die Pfropfpolymerisation zumindest in der letzten Phase als Polymerisation in wässriger Emulsion durchzuführen, wobei bevorzugt anionische Emulgatoren mitverwendet werden. Es fallen somit bei der Herstellung der Pfropfkautschuke in grosser Menge wässrige Pfropfpolymerisatdispersionen an, die zu den festen Pfropfpolymerisaten aufzuarbeiten sind.

Wie z.B. aus der DE-A 3149358 oder der EP-B 459161 bekannt, werden in der Regel die wässrigen Pfropfkautschukdispersionen durch Zusatz von Koagulantien gefällt, wobei als Koagulantien meist wässrige Lösungen von wasserlöslichen anorganischen oder organischen Säuren und/oder Salzen davon verwendet werden, wie Alkali- und Erdalkalichloride, -sulfate oder -phosphate, z.B. Calciumchlorid- oder Magnesiumsulfat-Lösungen. Die Koagulation oder Fällung wird im allgemeinen diskontinuierlich durchgeführt, kann jedoch auch kontinuierlich erfolgen (EP-B 459161). Die ausgefällten und abfiltrierten Koagulate werden dann in bekannter Weise gewaschen und getrocknet. Es ist ein bekannter Nachteil der Fällung durch Zusatz von Säuren oder Salzen als Koagulantien, dass oft Verunreinigungen in den aufgearbeiteten Polymeren verbleiben, die zu einer Beeinträchtigung der Produkteigenschaften führen können.

Aus der Patentschrift DE-C 2917321 ist ein Verfahren zur Abtrennung von Polymeren, die einen über 100°C liegenden Erweichungsbereich aufweisen, aus einer wässrigen Emulsion bekannt, wobei die wässrige Emulsion in einem Extruder durch Scheren und/oder Erhitzen auf Temperaturen über den Erweichungsbereich der Polymeren koaguliert wird, das Koagulat dann zusammengeschmolzen und unter Druck heiss aus dem Extruder ausgetragen wird. In einem nachfolgenden Verfahrensschritt wird dann das Wasser abgetrennt. Das Verfahren ist sehr energieaufwendig und benötigt zur Fällung einen gegenläufig kämmenden Doppelschneckenextruder. Ausserdem wird zur Beschleunigung der Koagulation Ammoniumacetat als Hilfsstoff verwendet.

In der US-A 3,821,348 ist ein Verfahren beschrieben, bei dem Mischungen von 70 bis 80 Gew.% Acrylnitril (AN) und 20 bis 30 Gew.% Methylacrylat (MA) unter späterem Zusatz von 12 Gew.% Butadien oder in Gegenwart von 9 Gew.% Butadien-Acrylnitril-Kautschuk (je bezogen auf die Summe der Mengen von AN + MA) in Emulsion polymerisiert werden. Die resultierenden Acrylnitril-Copolymerisatdispersionen oder -Pfropfpolymerisatdispersionen werden in einem Waring-Mischer als Schervorrichtung zu einer Paste koaguliert, dann in einem Extruder durch eine feine Düse zu dünnen Stäben verformt, die in heisses Wasser gegeben werden. Danach wird das Produkt gewaschen, getrocknet und in einer Pressform bei 150°C zu Stäben verarbeitet. Die Beschreibung des Verfahrens ist auf Copolymere mit hohem Acrylnitril-Gehalt und sehr kleinem Gehalt an elastomeren Butadien-Acrylnitril-Kautschuk beschränkt.

In der US-A 4,668,738, die auf die Technik der vorgenannten US-A 3,821,348 Bezug nimmt, wird festgestellt, dass wässrige Dispersionen mit einem Kautschukgehalt von über 50 Gew.% des Feststoffgehalts nur dann gut aufarbeitbare Produkte geben, wenn den Dispersionen vor ihrer Scherkoagulation Dispersionen von Styrol-Acrylnitril-Copolymerisaten als Hartkomponente in Mengen zugemischt werden, die den Kautschukgehalt der Copolymerisatmischung auf bevorzugt unter 50 Gew.% (bezogen auf den Gesamtfeststoffgehalt) herabsetzen. Es ist ein Nachteil des Verfahrens, dass Pfropfkautschukdispersionen, die für eine Schlagzähmodifizierung von Thermoplasten hergestellt werden, meist einen Kautschukgehalt von über 50 Gew.% des Feststoffgehalts aufweisen und somit nach dem Verfahren nur unter Zusatz von Dispersionen der Hartkomponente, d.h. unter Änderung der Bruttozusammensetzung der Polymeren verarbeitet werden können.

Der vorliegenden Erfindung lag die Aufgabe zugrunde, ein kostengünstiges Verfahren zur kontinuierlichen Koagulation von wässrigen Dispersionen von Pfropfkautschuken, die für die Schlagzähmodifizierung von harten Thermoplasten bei der Herstellung von ABS- und insbesondere ASA-Polymere geeignet sind, zu finden, das ohne Zusatz chemischer Koagulationsmittel durchführbar ist und bei dem ohne Zusatz anderer Polymerdispersionen gearbeitet wird, so dass die Polymeren in den koagulierten Emulsionen eine gleiche Bruttozusammensetzung wie die Polymeren in der Ausgangsemulsionen aufweisen. Zudem sollten beim Verfahren Dispersionen von Pfropfkautschuken mit einem Kautschukgehalt von über 50 Gew.%, bezogen auf den Feststoffgehalt, ebenfalls zu leicht aufarbeitbaren feuchten rieselfähigen Pulvern oder feuchtem Schlamm koaguliert werden können, ohne dass sie vor der Koagulation mit harten Acrylnitril-Copolymerisatdispersionen abgemischt werden müssen.

Es wurde nun gefunden, dass die Aufgaben allgemein gelöst werden können, wenn man die Pfropfkautschukdispersionen durch eine Vorrichtung mit mindestens einem Scherelement, das einen kreisförmigen geschlitzten Stator und einen innerhalb des Stators rotierenden geschlitzten Rotor aufweist, fördert und sie dabei der Wirkung einer für eine Scherkoagulation der Dispersion hinreichend starken Scherung unterwirft.

Gegenstand der vorliegenden Erfindung ist somit ein Verfahren zur kontinuierlichen Koagulation von wässrigen Dispersionen von zur Schlagzähmodifizierung von Thermoplasten geeigneten Pfropfkautschuken (P), die
a) als weiche Pfropfgrundlage (P1) elastomere Polymere und/oder Copolymere von 1,3-Dienen oder Acrylsäureestern mit einer Glasübergangstemperatur T_{g} von unter -10°C in einer Menge von 30 bis 85 Gew.% der Menge an Pfropfkautschuk (P) enthalten, und
b) eine harte ein- oder mehrschalige Pfropfhülle (P2) aus Monomereinheiten, die ein thermoplastisches Polymerisat oder Copolymerisat mit einer Glasübergangstemperatur T_{g} von über +50C bilden und deren Anteil an Acrylnitril- und/oder Methacrylnitril-Monomereinheiten 0 bis 45 Gew.% beträgt, enthalten, und
c) die zumindest in der letzten Sture der Pfropfpolymerisation durch Emulsionspolymerisation der Monomeren für die Pfropfhülle (P2) in Gegenwart der Ptroptgrundlage (P1) hergestellt wurden,
das dadurch gekennzeichnet ist, dass man die Pfropfkautschukdispersion durch eine Vorrichtung mit mindestens einem Scherelement mit einem feststehenden kreisförmigen geschlitzten Stator und einem innerhalb des Stators rotierenden geschlitzten Rotor, der auf einer drehbar gelagerten Antriebswelle montiert ist, so fördert, dass man die in die Vorrichtung eingeführte Pfropfkautschukdispersion durch die Rotation des Rotors in dem Scherelement radial von innen nach aussen leitet und beim bzw. nach dem Durchtritt durch die Schlitze von Rotor und Stator die Pfropfkautschukdispersion bei einer Schergeschwindigkeit im Scherelement von 4 bis 30 m/Sekunde einer so starken Scherung unterwirft, dass eine Koagulation der Pfropfkautschukdispersion erfolgt. Weitere Gegenstände der Erfindung sind die Verwendung geeigneter Vorrichtungen für die Scherkoagulation von Pfropfkautschukdispersionen sowie eine durch Verdrängerkörper modifizierte Vorrichtung für das Dispergieren oder Koagulieren von Dispersionen.

Nach dem erfindungsgemässen Verfahren wird die Pfropfkautschukdispersion, die bevorzugt axial in die Vorrichtung (10) eingeführt und insbesondere eingesaugt wird, in Scherelementen (13,14,15) aus Stator/Rotor-Kombinationen koaguliert. Innerhalb der im allgemeinen fest mit dem Gehäuse (11) der Dispergiervorrichtung (10) verbundenen kreisförmigen Statoren (13a,14a,15a), die als Scheiben und bevorzugt im wesentlichen topfförmig ausgebildet sind und Schlitze bzw. Zähne haben, sind geschlitzte Rotoren (13b, 14b,15b) auf einer drehbar gelagerten Antriebswelle (12) gelagert, wobei die Rotoren innerhalb der Statorkreise mit hoher Geschwindigkeit rotieren können. Dazu wird die Antriebswelle mit einem Motor verbunden. Der Strom der zentral dem ersten Rotor (13b) zugeführten Pfropfkautschukdispersion wird durch den mit hoher Geschwindigkeit rotierenden Rotor (13b) in Rotation versetzt und durch die Zentrifugalkraft im Scherelement (13) radial von innen nach aussen gefördert. Im radial äusseren Bereich von Stator und Rotor, wo die Radialgeschwindigkeit des Rotors besonders hoch ist, sind die Schlitze bzw. Zähne der Rotor- bzw. Statorwand angeordnet, durch die infolge der Zentrifugalkraft die Pfropfkautschukdispersion geschleudert wird. Beim bzw. nach dem Durchtritt durch die Schlitze bzw. Zahnlücken wird infolge der sehr hohen Relativgeschwindigkeit zwischen Rotor und Stator eine so starke Scherung bzw. Scherkraft auf die Dispersionsteilchen ausgeübt, dass diese aufeinander prallen und die Dispersion koaguliert. Dabei betragen die Schergeschwindigkeiten 4 bis 30 und bevorzugt 6 bis 25 m pro Sekunde. Die mittlere Verweilzeit der Pfropfkautschukdispersion in der Vorrichtung (10) beträgt dabei im allgemeinen weniger als 12, bevorzugt weniger als 10 und besonders bevorzugt weniger als 8 Sekunden. Die Vorrichtung (10) enthält im allgemeinen 1 bis 3 nacheinandergeschaltete Scherelemente (13,14,15), bevorzugt ein bis zwei Scherelemente, wobei deren Rotoren und Statoren mindestens eine durch axiale Schlitze gebildete Zahnreihe, aber auch mehrere konzentrisch angeordnete Reihen oder Kränze von Schlitzen bzw. Zähnen aufweisen können. Neben einfach geschlitzten Rotoren sind oft Rotoren von Vorteil, die zusätzliche Messer in axialer und/oder radialer Richtung haben, sowie Rotoren, die zusätzlich zu den Scherelementen mit turbinenschaufelartigen Verdrängerleisten versehen sind, was zu einer besseren Produktförderung und besseren Ansaugwirkung auf die Dispersion führt.

Die in ein oder mehreren Stator/Rotor-Kombinationen als Scherelemente der Scherung unterworfenen koagulierten Pfropfkautschukdispersionen fallen meist in Form eines rieselfähigen Pulvers oder in Form eines feuchten Schlammes an, die über eine radial angeordnete Austrittsöffnung die Vorrichtung (10) verlassen und dann direkt, also ohne Zwischenschaltung von Extrudern, einem Kessel mit heissem Wasser zugeführt werden können, wobei in manchen Fällen die Anwendung von Überdruck und von Wassertemperaturen von über 100°C vorteilhaft ist. Der koagulierte Pfropfkautschuk kann in einfacher Weise nach bekannten Methoden für die Weiterverwendung aufgearbeitet werden. Bei der erfindungsgemässen Scherkoagulation bestimmen die eingesetzte Dispersion, die Fällgüte, der geforderte Durchsatz und die erwünschte Koagulatform die Einzelheiten der Fahrweise der Vorrichtung, d.h. sie bestimmen z.B. die zweckmässige Zahl von Stator/Rotor-Kombinationen, die Schlitzanordnung bzw. Zahnung von Rotor und Stator sowie die evtl. Wahl besonderer Rotortypen. Dies kann in einer sehr begrenzten Zahl von einfachen Versuchen festgelegt bzw. optimiert werden. Gemeinsames Ziel ist meist, mit hohem Durchsatz eine vollständige Koagulation der verwendeten Polymerdispersion bei gleichbleibender Bruttozusammensetzung der Polymeren zu erreichen und möglichst gut weiterverarbeitbare Koagulate zu erzielen.

Die erfindungsgemäß zur Anwendung kommende Vorrichtung ist in den Figuren 1-3 beispielhaft erläutert. Es zeigen:
- Figur 1: einen Längsschnitt durch eine derartige Vorrichtung mit perspektivischer Darstellung des Rotors
- Figur 2A: eine Aufsicht auf einen Stator aus der Richtung des Pfeiles A in Figur 1
- Figur 2B: eine Seitenansicht eines Teilquerschnitts des Stators der Fiqur 2A
- Figur 2C: eine Ansicht auf einen Rotor aus der Richtung des Pfeiles A in Figur 1
- Figur 2D: eine Seitenansicht eines Teilquerschnitts des Rotors der Figur 2C
- Figur 3A: eine Aufsicht auf eine weitere Ausführungsform eines Stators aus der Richtung des Pfeiles A in Figur 1
- Figur 3B: eine Seitenansicht eines Teilquerschnitts des Stators der Figur 3A
- Figur 3C: eine Aufsicht auf eine weitere Ausführungsform eines Rotors aus der Richtung des Pfeiles A der Figur 1
- Figur 3D: eine Seitenansicht eines Teilquerschnitts des Rotors der Figur 3C

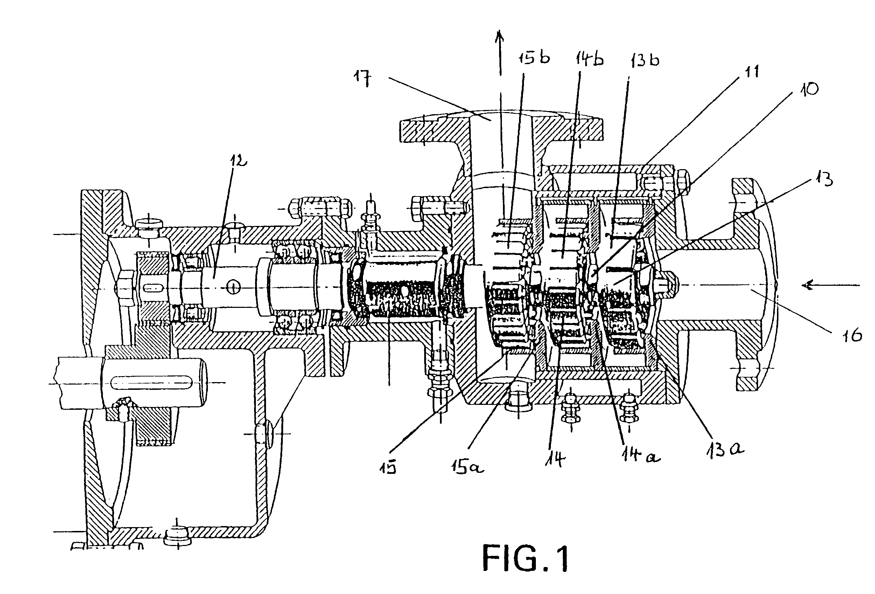

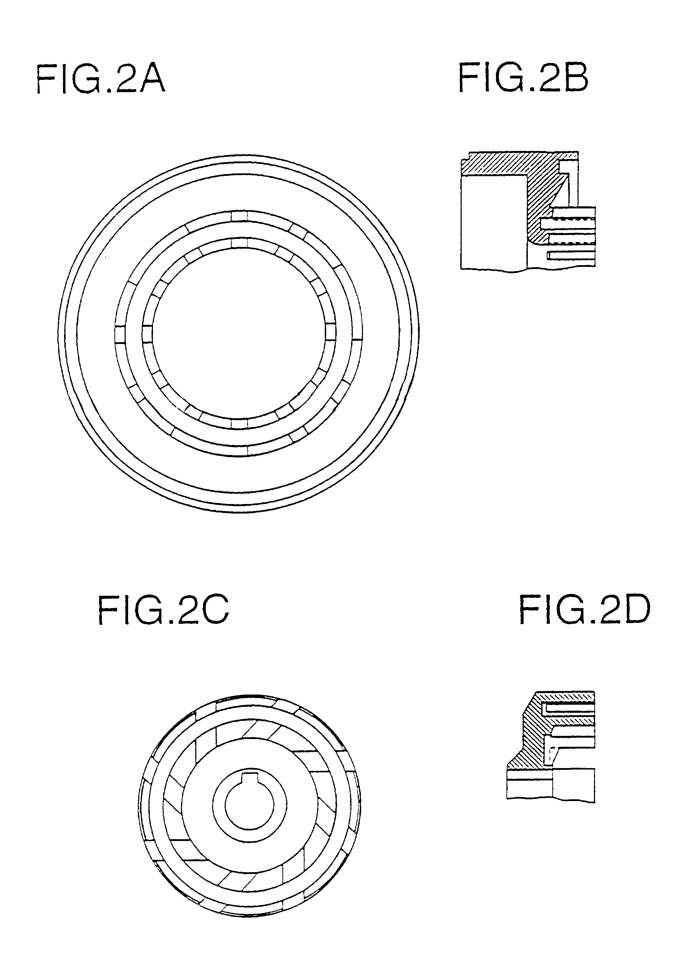

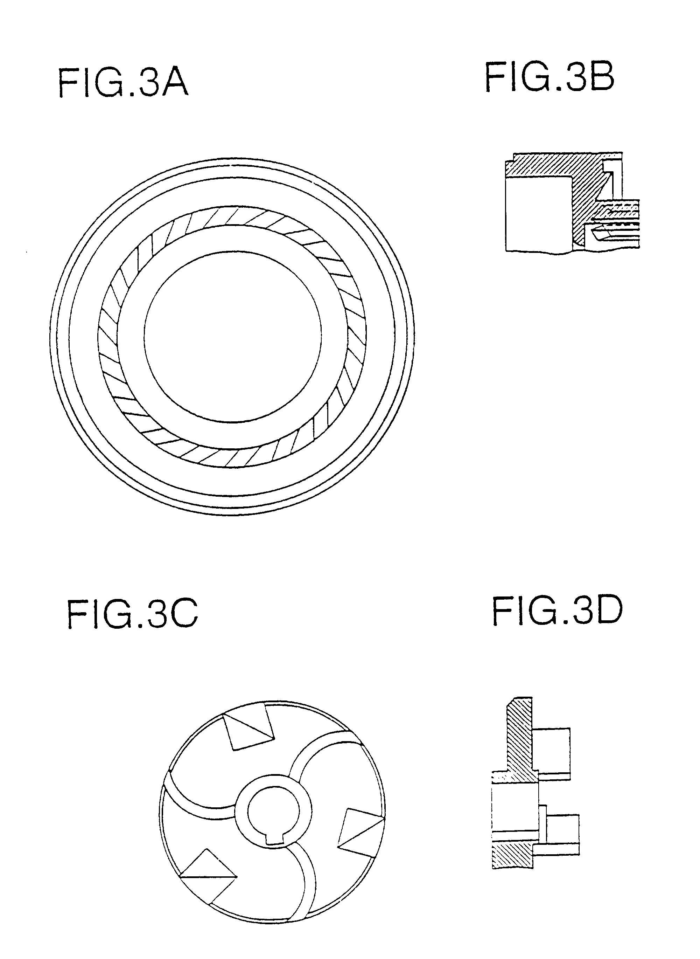

Eine sehr geeignete Vorrichtung (10) für das erfindungsgemässe Verfahren der kontinuierlichen Scherkoagulation von Pfropfkautschukdispersionen zeigt Figur 1 im Längsschnitt, wobei der Rotor perspektivisch dargestellt ist. Solche Vorrichtungen sind als Dispergiervorrichtungen im Handel, werden also für einen der Scherkoagulation genau entgegengesetzten Zweck verwendet. Im Innern eines Gehäuses (11) der Vorrichtung (10) sind zwei oder drei Scherelemente (13,14, 15) axial angeordnet, die jeweils aus kreisförmigen Statoren (13a, 14a,15a) als stehende Werkzeuge (siehe auch Figuren 2A und 3A) und aus den innerhalb der kreisförmigen Statoren rotierenden Rotoren (13b,14b,15b) als rotierende Werkzeuge bestehen. Die Rotoren (13b,14b, 15b) (siehe auch Figuren 2C und 3C) sind auf einer drehbar gelagerten und meist mit einem Motor verbundenen Antriebswelle (12) angeordnet. Die Statoren und Rotoren sind im wesentlichen topfförmig ausgebildet, wobei jeweils die kranzartige Wandung des topfförmigen Stators (13a,14a,15a) die Wandung des zugeordneten topfförmigen Rotors (13b,14b,15b) über eine bestimmte Länge radial übergreift. In den Wandungen sind axial orientierte, radial durchgehende Schlitze als Durchbrüche vorgesehen. Über eine in axialer Verlängerung der Antriebswelle (12) angeordnete Eintrittsöffnung (16) wird die zu koagulierende Pfropfkautschukdispersion in die Vorrichtung (10) eingesaugt und axial dem ersten Rotor (13b) zugeführt. In ihm wird die Dispersion in schnelle Rotation versetzt und durch die Zentrifugalkraft radial von innen nach aussen über die im Stator (13a) und Rotor (13b) ausgesparten Schlitze in einen zwischen dem Rotor (13b) und Stator (13a) definierten Ringspalt geschleudert. Aufgrund der hohen Relativgeschwindigkeit des Umfangs des Rotors (13b) gegenüber dem Stator (13a) entsteht ein starkes Schergefälle in der turbulenten Strömung im Ringspalt. Die Teilchen der Pfropfkautschukdispersion treffen daher mit hoher Geschwindigkeit aufeinander und koagulieren infolge der hohen Scherkräfte. Die zumindest weitgehend koagulierte Dispersion tritt radial aus der Vorrichtung (10) über die Austrittsöffnung (17) aus, die gemäss Fig. 1 oben liegt, gemäss einer anderen bevorzugten Ausführungsform aber auch unten liegen kann.

Wie angegeben sind Rotor und Stator geschlitzt, wobei die axialorientierten, radial durchgehenden Rotorschlitze mit Vorteil am oder nahe am Umfang des Rotors vorgesehen sind. Rotor und Stator können auch mehrere konzentrisch angeordnete geschlitzte bzw. gezahnte Kränze aufweisen, wobei gezahnt als geschlitzt gewertet wird (siehe z.B. Figur 2C). So weist in der Vorrichtung (10) gemäss Figur 1 der erste Rotor (13b) eine Zahnreihe auf, die zwischen zwei radial beabstandeten Zahnreihen des Stators (13a) verläuft. Es sind somit zwei Ringspalte vorhanden, in denen die Koagulation durch Scherung erfolgen kann. Der in Fig. 2A und 2B gezeigte Stator (13a) weist einen inneren Zahnkranz (21) und einen äußeren Zahnkranz (22) auf. Die äußere Statorwand ist mit (23) bezeichnet. Der in Figur 3A und 3B gezeigte Stator weist lediglich einen Zahnkranz (21) auf.

Der in Fig. 2C und 2D gezeigte Rotor (13b) weist einen inneren Zahnkranz (25) und einen äußeren Zahnkranz (26) auf. Der in Fig. 3C und 3D gezeigte Rotor umfaßt Scherkörper (27) und Turbinenschaufeln (Impeller) (28).

Mit Vorteil sind die für das erfindungsgemässe Verfahren verwendete Koaguliervorrichtungen mehrstufig ausgebildet und enthalten mehrere, z.B. 2 oder 3 nacheinander geschaltete Rotor/Stator-Kombinationen als Scherelemente. Doch kann es je nach den physikalischen Eigenschaften der Pfropfkautschukdispersion auch zweckmässig sein, nur eine oder zwei Rotor/Stator-Kombinationen als Scherelemente zu verwenden, um ein Optimum zwischen Fällgüte, Durchsatz und Produkteigenschaften zu erzielen. Figur 1 zeigt eine Vorrichtung mit drei nacheinander geschalteten Scherelementen (13,14,15). Dabei können die Rotoren und Statoren der Scherelemente Schlitze bzw. Zahnungen der gleichen Art oder von unterschiedlicher Art aufweisen. So zeigt Figur 1 in der Vorrichtung (10) ein erstes Scherelement (13), das einen Stator (13a) mit zwei radial beabstandeten Zahnreihen und einen Rotor (13b) mit nur einer Zahnreihe enthält. Das zweite Scherelement (14) der Vorrichtung (10) weist einen Stator (14a) mit drei Zahnreihen unc einen Rotor (14b) mit zwei Zahnreihen auf, die wieder konzentrisch ineinander geschachtelt sind. Der Rotor (14b) weist zudem mehr Zähne als der Rotor (13b) des ersten Scherelements (13) auf, die somit schmaler ausgebildet sind und einen geringeren Abstand voneinander haben. Das dritte Scherelement (15) der Vorrichtung (10) weist ebenso einen Stator (15a) mit drei Zahnreihen und einen Rotor mit zwei Zahnreihen auf, wobei der Rotor (15b) erneut mehr Zähne als der Rotor (14b) des zweiten Scherelements (14) hat.

In den für das erfindungsgemässe Verfahren verwendeten Scherelementen wird die Strömung der Dispersion mehrfach umgelenkt, so dass die Dispersionsteilchen nicht unbearbeitet die Vorrichtung passieren können.

In weiteren, besonders bevorzugten Ausführungsformen werden Vorrichtungen analog Figur 1 verwendet, die nur ein oder zwei Scherelemente (Stator/Rotor-Paare) enthalten, um so den Durchsatz und die Fällgüte zu optimieren. Der Raum des oder der weggelassenen Scherelemente, z.B. der Raum (13) der weggelassenen Stator/Rotor-Kombination (13a/13b) wird bevorzugt durch einen genau eingepassten Verdrängerkörper ausgefüllt, so dass in der Vorrichtung keine zusätzlichen Totvolumina entstehen. Ein z.B. im Raum (13) die Stator/ Rotor-Kombination (13a/13b) ersetzender zylindrischer Verdrängerkörper füllt genau den Platz der Stator/Rotor-Kombination aus, dessen zentrale Bohrung dem inneren Durchmesser der Zuleitung entspricht. Diese gegenüber im Handel erhältlichen Vorrichtungen neu modifizierte Vorrichtung hat sich nicht nur für das erfindungsgemässe Verfahren, sondern allgemein bei Vorrichtungen dieser Art für die Herstellung oder Koagulation von Polymerdispersionen als überraschend vorteilhaft erwiesen.

Wie erwähnt, sind Vorrichtungen, die für das erfindungsgemässe Verfahren zur kontinuierlichen Koagulation von Pfropfkautschukdispersionen verwendet werden können, ausgenommen die soeben beschrienbene mit Verdrängungskörpern modifizierte Vorrichtung, als Dispergiervorrichtungen bekannt und erhältlich. Sie werden also zur Herstellung und Verteilung feiner Polymerteilchen in wässriger Dispersion verwendet, während sie gemäss dem erfindungsgemässen Verfahren zur Zerstörung der wässrigen Polymerdispersion durch Erzeugung grösserer koagulierter Polymerteilchen dienen. Ein weiterer Gegenstand der Erfindung liegt somit in der Verwendung dieser Vorrichtungen zur Scherkoagulation von wässrigen Dispersionen von Pfropfkautschuken, wobei sich die Verwendung der beschriebenen neuen Vorrichtungen mit mindestens einem Verdrängerkörper allgemein auf das Dispergieren und Koagulieren von Polymerdispersionen bezieht.
Erfindungsgemäss werden wässrige Dispersionen von Pfropfkautschuken koaguliert, wobei das Verfahren sich zur Koagulation von wässrigen Dispersionen von Pfropfkautschuken, die elastomere Acrylatpolymere als Pfropfgrundlage (P1) haben, besonders bewährt hat. In den erfindungsgemäss zu koagulierenden Dispersionen liegen die Pfropfkautschuke insbesondere mit Feststoffgehalten von 20 bis 65 und bevorzugt 30 bis 60 Gew.% vor. Das erfindungsgemässe Verfahren lässt sich somit direkt für die Dispersionen verwenden, wie sie nach der Pfropfpolymerisation in wässriger Dispersion anfallen.

Als Pfropfkautschuke, deren wässrige Dispersionen erfindungsgemäss koaguliert werden, werden Pfropfpolymere verstanden, bei denen auf Teilchenkerne aus weichem Kautschuk (P1) harte Thermoplaste bildende Monomere wie insbesondere Styrol, Acrylnitril und/oder Methylmethacrylat als Pfropfhülle oder Pfropfschale (P2) aufgepfropft werden, was durch Polymerisation oder Copolymerisation der Monomeren für die Pfropfhülle (P2) in Gegenwart der Kautschukteilchen (P1) erfolgt. Dabei gehen die Monomeren bzw. entstehenden Polymerisate z.T. eine Verknüpfung mit der Oberfläche der Kautschukteilchen ein, was durch gezielte bekannte Verfahrensmaßnahmen gesteigert werden kann (Erhöhung der Pfropfausbeute). Durch Wiederholung der Pfropfmaßnahme lassen sich auch Pfropfkautschuke mit mehr als einer Pfropfhülle oder Pfropfschale (P2) herstellen.

Als weiche Kautschuke (Pfropfgrundlage P1) für die Herstellung der Pfropfkautschuke eignen sich elastomere Polymere und/oder Copolymere mit Glasübergangstemperaturen von unter -10°C und bevorzugt von unter - 30°C. Es sind besonders geeignet elastomere 1,3-Dien-Homo- und -Copolymere wie Butadien-, Isopren- oder Chloropren-Homo- und -Copolymere, bevorzugt Butadien-Kautschuk, sowie elastomere Acrylester-Homo- und/oder -Copolymere mit den genannten niedrigen Glasübergangstemperaturen. Elastomere Acrylesterpolymere sind für die erfindungsgemäß koagulierten Pfropfkautschuke bevorzugt wie Homo- und -Copolymere von C₄- bis C₈-Alkylacrylaten, insbesondere von n-Butylacrylat und/oder 2-Ethylhexylacrylat. Beispiele von bevorzugten Comonomeren der Alkylacrylate sind vernetzende Monomere mit mindestens zwei nichtkonjugierten C=C-Doppelbindungen wie Diallylmaleat, Diallylphthalat, Diacrylate und Dimethacrylate von Diolen wie 1,4-Butandiol oder 1,6-Hexandiol usw., bevorzugt Allylmethacrylat oder Dihydrodicyclopentadienylacrylat, die insbesondere in einer Menge von 0,5 bis 10 Gew.% der Gesamtmonomerenmenge bei der Elastomerenherstellung verwendet werden, ferner polare Monomere wie Acrylsäure, Methacrylsäure, Maleinsäureanhydrid, Acrylamid, Methacrylamid, N-Methylolacrylamid oder -methacrylamid und deren Alkylether. Der Anteil der Elastomeren (P1) im Pfropfkautschuk (P) beträgt im allgemeinen 30 bis 85 Gew.%, wobei nach dem erfindungsgemässen Verfahren sich bevorzugt auch Pfropfkautschuke (P) mit Vorteil verarbeiten lassen, deren Anteil an Elastomerem (P1) mehr als 50, z.B. etwa 55 bis etwa 85 Gew.%, bezogen auf den Gesamtfeststoffgehalt, beträgt.

Als Monomere für das Aufpolymerisieren der Pfropfhülle oder Pfropfschale (P2) sind insbesondere Monomere und Mischungen davor. geeignet, die harte Polymerisate bzw. Copolymerisate mit Glasübergangstemperaturen von über + 50°C bilden. Die Art des bzw. der Monomeren dafür richtet sich dabei weitgehend nach der Art der Thermoplasten, die nach Abmischung mit dem Pfropfkautschuk die Polymermatrix bilden werden und zu denen zur Erzielung einer feinen Zweiphasen-Verteilung der Pfropfkautschuke in der Matrix die Pfropfhülle eine gewisse Verträglichkeit bzw. Affinität aufweisen soll. Besonders geeignete und übliche Monomere für die Pfropfhülle sind vinyl- und alkenylaromatische Monomere mit 8 bis 12 C-Atomen, wie Styrol, α-Methylstyrol, sowie Styrole und α-Me-thylstyrole, die am Benzolkern ein oder mehrere Alkyl-, insbesondere Methylgruppen als Substituenten tragen. Sie können die alleinigen Monomeren für die Herstellung der Pfropfhülle (P2) sein oder im Gemisch mit anderen Monomeren, wie Methylmethacrylat, Methacrylnitril und bevorzugt Acrylnitril verwendet werden, wobei die Methacrylnitril- und/oder Acrylnitril-Monomereinheiten in der Pfropfhülle einen Anteil von 0 bis 45 Gew.% und bevorzugt 10 bis 40 Gew.% der Pfropfhülle aufweisen. Bevorzugt sind Mischungen von Styrol mit 10 bis 40 Gew.% der Gesamtmonomerenmenge an Acrylnitril. Als bevorzugte weitere Monomere für die Herstellung der Pfropfhülle seien auch Methacrylsäureester und Acrylsäureester genannt, von denen Methylmethacrylat bevorzugt ist, das auch als alleiniges oder in überwiegender Menge verwendetes Monomeres für die Herstellung der Pfropfhülle verwendet werden kann. Von geeigneten Comonomeren für die Herstellung der Pfropfhülle (P2) seien aber auch Maleinsäureanhydrid, Maleinsäureimid, N-Phenylmaleinsäureimid, Acrylsäure und Methacrylsäure genannt.

Für das erfindungsgemässe Verfahren der Koagulation sind besonders Pfropfkautschukdispersionen geeignet, die durch Pfropfung der Elastomeren mit den Monomeren für die Pfropfhülle zumindest in der letzten Verfahrensstufe der Pfropfpolymerisation in wässriger Emulsion und dann besonders in Gegenwart von anionischen Emulgatoren hergestellt wurden. Übliche anionische Emulgatoren sind z.B. Alkalisalze von Alkyl- oder Alkylarylsulfonsäuren, Alkylsulfate, Fettalko-holsulfonate, Salze von Fettsäuren mit 10 bis 30 C-Atomen oder Harzseifen. Sehr geeignet sind Emulsionen, die mit Natriumsalzen von Fettsäuren mit 10 bis 18 C-Atomen (anionische Seifen) oder Alkylsulfonaten als anionische Emulgatoren hergestellt wurden. Die anionischen Emulgatoren werden dabei in Mengen von 0,5 bis 5, insbesondere von 1 bis 2 Gew.%, bezogen auf die Monomerenmenge, angewandt. Bei beabsichtigter späterer Scherkoagulation der Pfropfkautschukemulsionen wird ein Überschuß an Emulgator vermieden.

Die nachstehenden Ausführungsbeispiele und Figuren sollen das erfindungsgemässe Verfahren näher erläutern, aber nicht beschränken. Angaben in Teilen oder Prozenten beziehen sich, sofern nicht anders angegeben, auf das Gewicht.

### Beispiel 1

### a) Herstellung der Pfropfkautschukdispersion mit Polybutadien als Pfropfgrundlage

In einer Lösung von 0,6 Teilen tert.Dodecylmercaptan, 0,7 Teilen von Natrium-C₁₄-Alkylsulfonat als Emulgator, 0,2 Teiler Kaliumperoxodisulfat und 0,2 Teilen Natriumdisulfat in 80 Teilen Wasser wurden bei 65°C 60 Teile Butadien bis zu einem Monomerenumsatz von 98 % polymerisiert. Im erhaltenen Latex hatte das Polybutadien eine mittlere Teilchengrösse von 100 nm und wurde daher durch Zusatz von 25 Teilen einer 10 %igen Emulsion eines Copolymeren aus 96 % Ethylacrylat und 4 % Methacrylamid agglomeriert, wobei sich eine mittlere Teilchengrösse von 350 nm einstellte. Die Glasübergangstemperatur des Polybutadiens beträgt -85°C.

Zum Produkt wurden 40 Teile Wasser, 0,4 Teile Natrium-C₁₄-Alkylsulfonat, 0,2 Teile Kaliumperoxodisulfat zugegeben.

40 Teile einer Mischung von 70% Styrol und 30% Acrylnitril wurden innerhalb von 4 Stunden allmählich zugegeben und der Ansatz unter Rühren bei 75°C gehalten. Der Monomerenumsatz war praktisch quantitativ. Die Glastemperatur eines Copolymerisats aus 70% Styrol und 30% Acrylnitril beträgt ca.+105°C.

### b) Koagulation der gemäss a) hergestellten Dispersion

Die Koagulation der Pfropfkautschukdispersion wurde gemäss dem erfindungsgemässen Verfahren durchgeführt, wobei als Vorrichtung eine Dispax 3/6/6-Dispergiervorrichtung der Fa. Janke & Kunkel verwendet wurde, die zwei Rotor/Stator-Kombinationen (beide grob) mit einem Stator-Aussendurchmesser von ca. 60 mm und einem Rotor-Aussendurchmesser von 55 mm als Scherelemente enthielt. Ansonsten ist die Vorrichtung der in Figur 1 abgebildeten Vorrichtung (10) ähnlich. Die Dispersion wurde mit einer Temperatur von 77°C der Vorrichtung axial zugeführt. Im ersten Scherelement (13) wies der Stator 2 und der Rotor 2 Zahnkränze auf (siehe Figur 2), der Raum 14 blieb leer, und im zweiten Scherelement (15) wiesen der Stator und der Rotor je einen Zahnkranz auf, wobei der Rotor noch turbinenschaufelartige Verdrängerleisten enthielt (siehe Fig.3). Die Drehzahl der Rotoren betrug 7500 Umdrehungen/Minute, der Durchsatz der Vorrichtung betrug 200 kg/Stunde. Beim Austritt aus der Vorrichtung wurde ein trocken aussehen-des Koagulat erhalten, das eine Restfeuchtigkeit von 57 % und eine mittlere Teilchengrösse von 1 mm bei einer breiten Teil-chengrössenverteilung (0,05 - 5 mm) hatte. Das Koagulat wurde in freiem Fall in einen gerührten Kessel mit heissem Wasser eingegeben. Danach liess sich das Produkt leicht durch Dekantieren, Zentrifugieren und Trocknen entwässern. Das resultierende Produkt konnte dann direkt als Schlagzäh-Modifier durch Einmischen in Styrol-Acrylnitril-Copolymere auf dem Extruder verarbeitet werden.

### Beispiel 2

### a) Herstellung der Pfropfkautschukdispersion mit Polybutadien als Pfropfgrundlage

Die Hersteilung erfolgte wie in Beispiel 1a) beschrieben.

### b) Koagulation der gemäss a) hergestellten Dispersion

Die Koagulation der Pfropfkautschukdispersion wurde gemäss dem erfindungsgemässen Verfahren durchgeführt, wobei als Vorrichtung eine Dispax 3/6/6-Dispergiervorrichtung der Fa. Janke & Kunkel verwendet wurde. Die Vorrichtung ist der in Figur 1 abgebildeten Vorrichtung (10) ähnlich. Das erste Scherelement (13) war durch einen eingepassten zylindrischen Verdrängerkörper mit zentraler Bohrung ersetzt, das den Raum (13) ohne Totraum voll ausfüllte und der innere Durchmesser der zentralen Bohrung dem inneren Durchmesser der Zuleitung entsprach. Das Scherelement (14) war eine Stator/Rotor-Kombination (14a/14b) mit grober Zahnung. Das Scherelement (15) wies eine Stator/Rotor-Kombination (15a/ 15b) auf entsprechend der Figur 3. Die Drehzahl betrug 7500 Umdrehungen pro Minute, die Temperatur 75°C und der Durchsatz 300 kg/Stunde. Es wurde ein krümeliges Produkt erhalten, das wie in Beispiel 1 angegeben aufgearbeitet wurde. Der Feuchtigkeitsgehalt betrug 55,3 %, die Teilchengrösse im Mittel 1 mm bei breiter Teilchengrössenverteilung (0,04 - 4 mm).

### Beispiel 3

### a) Herstellung der Pfropfkautschukdispersion mit elastomerem Polyacrylat als Pfropfgrundlage 160 Teile eines Gemisches aus 98% Butylacrylat und 2 % Dicyclopentadienylacrylat wurden in 1500 Teilen Wasser unter Zusatz von 5 Teilen des Natriumsalzes einer C₁₂-C₁₈-Paraffinsulfonsaure, 3 Teilen Kaliumperoxodisulfat, 3 Teilen Natriumhydrogencarbonat und 1,5 Teilen Natriumdiphosphat unter Rühren auf 60°C erwärmt. 15 Minuten nach dem Beginn der Polymerisationsreaktion wurden innerhalb von 3 Stunden weitere 840 Teile der Monomerenmischung zugegeben. Nach Beendigung der Monomerenzugabe wurde die Emulsion noch eine Stunde bei 60°C gehalten. Die Glasübergangstemperatur des Elastomeren beträgt -42°C.

2100 Teile der Emulsion wurden mit 1150 Teilen Wasser und 2,7 Teilen Kaliumperoxodisulfat versetzt und unter Rühren auf 65°C erwärmt. Nach Erreichen dieser Temperatur werden im Laufe von 3 Stunden 560 Teile eines Gemisches aus 75% Styrol und 25% Acrylnitril zudosiert. Nach Beendigung der Zugabe wird der Ansatz noch 2 Stunden bei 65°C gehalten. Die Glasübergangstemperatur eines Copolymeren aus 75% Styrol und 25% Acrylnitril beträgt + 111°C.

### b) Koagulation der gemäss a) hergestellten Dispersion

Die Koagulation wurde gemäss dem erfindungsgemässen Verfahren durchgeführt, wobei eine der in Figur 1 dargestellten Schervorrichtung (10) ähnliche Laborvorrichtung verwendet wurde, die als Verfahrensteil zwei Scherelemente (14,15) mit je einem geschlitzten Rotor (14b,15b) und je einem mit dem Gehäuse fest verbundenen geschlitzten Stator (14a,15a) aufwies. Das Scherelement (13) war durch einen genau eingepassten zylindrischen Verdrängerkörper mit zentraler Bohrung ersetzt. Der Aussendurchmesser der Statoren (14a,15a) betrug ca. 60 mm, der der Rotoren (14b,15b) ca. 53 mm.

Stator (14a) und Rotor (14b) sind in Figur 2, Stator (15a) und Rotor (15b) sind in Figur 3 schematisch dargestellt. Die Spaltbreite zwischen Rotorzahnung und Statorzahnung betrug ca. 0,75 mm. Die Pfropfkautschukdispersion wurde mit einer Temperatur von 60°C der Vorrichtung axial zugeführt und in den Scherelementen radial von innen nach aussen gefördert. Die Rotordrehzahl betrug 8000 Umdrehungen pro Minute, der Durchsatz 440 kg/Stunde. An der Austrittsöffnung (17) wurde radial ein Produkt in Form eines feuchten Schlammes ausgetragen. Er wurde durch Erhitzen mit Dampf unter Überdruck auf eine Temperatur oberhalb der Glasubergangstemperatur T_{g} der Pfropfhülle in grössere Agglomerate überführt, die sich leicht durch Dekantieren, Zentrifugieren und Trocknen entwässern liessen. Das resultierende Produkt war als Schlagzäh-Modifier für die Herstellung von ASA-Polymeren sehr geeignet.

### Bezugszeichenliste

- 10: Vorrichtung
- 11: Gehäuse
- 12: Antriebswelle
- 13: erstes Scherelement
- 13a: erster Stator
- 13b: erster Rotor
- 14: zweites Scherelement
- 14a: zweiter Stator
- 14b: zweiter Rotor
- 15: drittes Scherelement
- 15a: dritter Stator
- 15b: dritter Rotor
- 16: Eintrittsöffnung
- 17: Austrittsöffnung
- 21: innerer Zahnkranz des Stators
- 22: äußerer Zahnkranz des Stators
- 23: Außenwand des Stators
- 25: innerer Zahnkranz des Rotors
- 26: äußerer Zahnkranz des Rotors
- 27: Scherkörper
- 28: Turbinenschaufel

## Patentansprüche

1. Verfahren zur kontinuierlichen Koagulation von wässrigen Dispersionen von Pfropfkautschuken (P), die
a) als weiche Pfropfgrundlage (P1) elastomere Polymere und/oder Copolymere von 1,3-Dienen oder Acrylestern mit einer Glasübergangstemperatur T_{g} von unter - 10°C in einer Menge von 30 bis 85 Gew.% der Menge an Pfropfkautschuk (P) enthalten, und
b) eine harte ein- oder mehrschalige Pfropfhülle (P2) aus Monomereinheiten, die ein thermoplastisches Polymerisat oder Copolymerisat mit einer Glasübergangstemperatur von über + 50°C bilden und deren Anteil an Acrylnitril- und/oder Methacrylnitril-Monomereinheiten 0 bis 45 Gew.% beträgt, enthalten, und
c) die zumindest in der letzten Stufe der Pfropfpolymerisation durch Emulsionspolymerisation der Monomeren für die Pfropfhülle (P2) in Gegenwart der Pfropfgrundlage (P1) hergestellt wurden,
**dadurch gekennzeichnet, dass** man die Pfropfkautschukdispersion durch eine Vorrichtung (10) mit mindestens einem Scherelement (13,14,15) mit einem feststehenden kreisförmigen geschlitzten Stator (13a,14a,15a) und einem innerhalb des Stators rotierenden geschlitzten Rotor (13b, 14b,15b), der auf einer drehbar gelagerten Antriebswelle (12) montiert ist, so fördert, dass man die in die Vorrichtung (10) eingeführte Pfropfkautschukdispersion durch die Rotation des Rotors (13b,14b,15b) in dem Scherelement (13,14,15) radial von innen nach aussen leitet und beim bzw. nach dem Durchtritt durch die Schlitze von Rotor (13b,14b,15b) und Stator (13a,14a,15a) die Pfropfkautschukdispersion bei einer Schergeschwindigkeit im Scherelement (13,14,15) von 4 bis 30 m/Sekunde einer so starken Scherung unterwirft, dass eine Koagulation der Pfropfkautschukdispersion erfolgt.

2. Verfahren nach Anspruch 1, **dadurch gekennzeichnet, dass** die Vorrichtung (10) zwei oder drei Scherelemente (13, 14,15) mit je einer Stator/Rotor-Kombination enthält.

3. Verfahren nach Anspruch 1 oder 2, **dadurch gekennzeichnet, dass** man die Pfropfkautschukdispersion durch eine Eintrittsöffnung (16) axial in die Vorrichtung (10) einführt und dem ersten Scherelement (13a) zuführt und nach dem Passieren des oder der Scherelemente (13,14,15) das resultierende koagulierte Produkt durch eine radial angeordnete Austritts-öffnung (17) aus der Vorrichtung (10) austreten lässt.

4. Verfahren nach einem der Ansprüche 1 bis 3, **dadurch gekennzeichnet, dass** die Vorrichtung (10) mehrere Scherelemente (13,14,15) enthält und jeder Rotor (13b,14b,15b) und Stator (13a,14a,15a) ein bis drei konzentrisch angeordnete, durch axiale Schlitze gebildete Zahnreihen für die Scherung aufweist.

5. Verfahren nach einem der Ansprüche 1 bis 4, **dadurch gekennzeichnet, dass** die Koagulation in der Schervorrichtung mit nur ein oder zwei Scherelementen (13,14,15) erfolgt, und der Raum mindestens eines weggelassenen Scherelements zur Vermeidung von Totvolumina durch einen Verdrängerkörper ausgefüllt ist.

6. Verfahren nach einem der Ansprüche 1 bis 5, **dadurch gekennzeichnet, dass** mindestens ein Rotor (13b,14b,15b) verwendet wird, der in axialer und/oder radialer Richtung angeordnete Messer aufweist.

7. Verfahren nach einem der Ansprüche 1 bis 6, **dadurch gekennzeichnet, dass** mindestens einer der Rotoren (13b, 14b,15b) turbinenschaufelartige Verdrängerleisten aufweist.

8. Verwendung einer Vorrichtung (10), die ein bis drei Scherelemente (13,14,15) enthält mit je einem kreisförmigen geschlitzten Stator (13a,14a,15a) und je einem innerhalb des jeweiligen Stators rotierenden geschlitzten Rotor (13b,14b,15b), der auf einer drehbar gelagerten Antriebswelle (12) montiert ist, für die kontinuierliche Koagulation von wässrigen Pfropfkautschukdispersionen durch Scherung der Dispersion in den Scherelementen (13,14,15) mit den rotierenden Rotoren (13b, 14b,15b).

9. Vorrichtung (10) zum Dispergieren und Koagulieren von Polymerdispersionen, die in einem Vorrichtungsgehäuse (11) mehrere Kombinationen (13,14,15) von feststehenden geschlitzten Statoren (13a,14a,15a) und innerhalb der Statoren rotierenden geschlitzten Rotoren (13b,14b,15b) enthalten können, wobei die Rotoren auf einer drehbar gelagerten Antriebswelle montiert sind, **dadurch gekennzeichnet, dass** der Raum mindestens einer nicht benötigten und daher weggelassenen Rotor/Stator-Kombination (13,14,15) zur Vermeidung von Totvolumina mit einem eingepassten und ggf. funktionell bedingte Bohrungen aufweisenden Verdrängerkörper weitgehend ausgefüllt ist.

## Claims

1. A process for the continuous coagulation of aqueous dispersions of graft rubbers (P) which
a) contain, as soft grafting base (P1), elastomeric polymers or copolymers of 1,3-dienes or acrylic esters having a glass transition temperature T_{g} of less than -10°C in an amount of from 30 to 85% by weight of the amount of graft rubber (P) and
b) contain a hard one-shell or multishell graft shell (P2) comprising monomer units which form a thermoplastic polymer or copolymer having a glass transition temperature of more than +50°C and whose content of acrylonitrile or methacrylonitrile monomer units is from 0 to 45% by weight, and
c) at least in the last stage of the graft polymerization, were prepared by emulsion polymerization of the monomers for the graft shell (P2) in the presence of the grafting base (P1),
wherein the graft rubber dispersion is transported through an apparatus (10) having at least one shear element (13, 14, 15) with a stationary circular slotted stator (13a, 14a, 15a) and a slotted rotor (13b, 14b, 15b) which rotates within the stator and is mounted on a rotatably mounted drive shaft (12), so that the graft rubber dispersion introduced into the apparatus (10) is passed radially from the inside to the outside as a result of the rotation of the rotor (13b, 14b, 15b) in the shear element (13, 14, 15) and, during or after passage through the slots of the rotor (13b, 14b, 15b) and stator (13a, 14a, 15a), is subjected, at a shear velocity in the shear element (13, 14, 15) of from 4 to 30 m/second to shearing which is so strong that coagulation of the graft rubber dispersion takes place.

2. A process as claimed in claim 1, wherein the apparatus (10) contains two or three shear elements (13, 14, 15), each having a stator/rotor combination.

3. A process as claimed in claim 1 or 2, wherein the graft rubber dispersion is introduced axially into the apparatus (10) through an inlet orifice (16) and fed to the first shear element (13a) and, after passing the shear element or elements (13, 14, 15), the resulting coagulated product emerges from the apparatus (10) through a radially arranged outlet orifice (17).

4. A process as claimed in any of claims 1 to 3, wherein the apparatus (10) contains a plurality of shear elements (13, 14, 15) and each rotor (13b, 14b, 15b) and stator (13a, 14a, 15a) has, for shearing, from one to three concentrically arranged rows of teeth formed by axial slots.

5. A process as claimed in any of claims 1 to 4, wherein the coagulation is effected in the shearing apparatus with only one shear element or two shear elements (13, 14, 15), and the space left by at least one omitted shear element is filled by a displacer element to avoid dead volumes.

6. A process as claimed in any of claims 1 to 5, wherein at least one rotor (13b, 14b, 15b) which has blades arranged in the axial or radial direction is used.

7. A process as claimed in any of claims 1 to 6, wherein at least one of the rotors (13b, 14b, 15b) has turbine blade-like displacer strips.

8. The use of an apparatus (10) which contains from 1 to 3 shear elements (13, 14, 15), each having a circular slotted stator (13a, 14a, 15a) and each having a slotted rotor (13b, 14b, 15b) which rotates within the respective stator and is mounted on a rotatably mounted drive shaft (12), for the continuous coagulation of aqueous graft rubber dispersions by shearing the dispersion in the shear elements (13, 14, 15) with the rotating rotors (13b, 14b, 15b).

9. Apparatus (10) for dispersing and coagulating polymer dispersions, which may contain, in an apparatus housing (11), a plurality of combinations (13, 14, 15) of stationary slotted stators (13a, 14a, 15a) and slotted rotors (13b, 14b, 15b) rotating within the stators, the rotors being mounted on a rotatably mounted drive shaft, wherein, in order to avoid dead volumes, the space left by at least one unnecessary and therefore omitted rotor/stator combination (13, 14, 15) is substantially filled by a fitted displacer element which may have bores required for its functioning.

## Revendications

1. Procédé de coagulation en continu de dispersions aqueuses de caoutchoucs greffés (P), qui
a) contiennent en tant que base de greffage molle (P1) des polymères élastomères et/ou des copolymères de 1,3-diènes ou d'esters acryliques d'une température de transition vitreuse T_{g} inférieure à -10°C, en quantité de 30 à 85% en poids de la quantité de caoutchouc greffé, et qui
b) contiennent une enveloppe de greffage dure (P2) mono- ou multicouche constituée d'unités monomères, qui forment un copolymère ou un polymère thermoplastique d'une température de transition vitreuse supérieure à +50°C et dont la fraction en unités monomères d'acrylonitrile et/ou de méthacrylonitrile est de 0 à 45% en poids, et qui
c) sont préparés, tout au moins dans la dernière étape de la polymérisation de greffage, par polymérisation en émulsion des monomères de l'enveloppe de greffage (P2) en présence de la base de greffage (P1),
**caractérisé en ce que** l'on envoie la dispersion de caoutchouc de greffage dans un dispositif (10) comportant au moins un élément de cisaillement (13, 14, 15) avec stator (13a, 14a, 15a) fixe cylindrique rainuré et un rotor rainuré (13b, 14b, 15b) tournant à l'intérieur du stator et monté sur un arbre d'entraînement (12) rotatif sur paliers, de manière que la dispersion de caoutchouc greffé introduite dans le dispositif (10) soit guidée par la rotation du rotor (13b, 14b, 15b) dans l'élément de cisaillement (13, 14, 15), radialement de l'intérieur vers l'extérieur, et que pendant ou après son passage dans les rainures du rotor (13b, 14b, 15b) et du stator (13a, 14a, 15a), la dispersion de caoutchouc greffé soit soumise dans l'élément de cisaillement (13, 14,15), et à une vitesse de cisaillement de 4 à 30 m/seconde, à un cisaillement tel qu'il se produise une coagulation de la dispersion de caoutchouc greffé.

2. Procédé selon la revendication 1, **caractérisé en ce que** le dispositif (10) contient deux ou trois éléments de cisaillement (13, 14, 15), chacun avec une combinaison stator/rotor.

3. Procédé selon la revendication 1 ou 2, **caractérisé en ce que** la dispersion de caoutchouc greffé est introduite axialement dans le dispositif (10) par une ouverture d'amenée (16), et amenée au premier élément de cisaillement (13a) et qu'après passage dans le ou les éléments de cisaillement (13, 14, 15), le produit coagulé résultant est déchargé du dispositif par une ouverture de sortie (17) ménagée radialement.

4. Procédé selon l'une des revendications 1 à 3, **caractérisé en ce que** le dispositif (10) contient plusieurs éléments de cisaillement (13, 14,15) et que chaque rotor (13b, 14b, 15b) et stator (13a, 14a, 15a) présente, pour assurer le cisaillement, de une à trois rangées de dents agencées de manière concentrique et formées par des rainures axiales.

5. Procédé selon l'une des revendications 1 à 4, **caractérisé en ce que** la coagulation n'a lieu dans le dispositif de cisaillement qu'avec un ou deux éléments de cisaillement (13, 14, 15) seulement et que l'espace d'au moins un élément de cisaillement non utilisé est rempli par un corps de refoulement afin de supprimer tout volume perdu.

6. Procédé selon l'une des revendications 1 à 5, **caractérisé en ce que** l'on utilise au moins un rotor (13b, 14b, 15b) présentant des couteaux agencés en direction axiale et/ou radiale.

7. Procédé selon l'une des revendications 1 à 6, **caractérisé en ce qu'**au moins un des rotors (13b, 14b, 15b) présente des nervures de guidage en forme d'ailettes de turbine.

8. Utilisation d'un dispositif (10), contenant de un à trois éléments de cisaillement (13,14, 15) comportant chacun un stator circulaire rainuré (13a, 14a, 15a) et chacun un rotor rainuré (13b, 14b, 15b) tournant à l'intérieur du stator correspondant, monté sur un arbre rotatif (12) sur paliers, pour la coagulation en continu d'émulsions aqueuses de caoutchoucs greffés par cisaillement de la dispersion dans les éléments de cisaillement (13, 14, 15) par les rotors tournants (13b, 14b, 15b).

9. Dispositif (10) pour la dispersion et la coagulation de dispersions de polymères, pouvant contenir dans un carter de dispositif (11) plusieurs combinaisons (13, 14, 15) de stators fixes rainurés (13a, 14a, 15a) et de rotors rainurés (13b, 14b, 15b) tournant dans les stators, où les rotors sont montés sur un arbre rotatif sur paliers, **caractérisé en ce que** l'espace d'au moins une combinaison stator/rotor (13, 14, 15) non utilisée et dès lors laissée de côté est pratiquement rempli, afin de supprimer tout volume perdu, par un corps de refoulement adapté et présentant éventuellement des alésages à fonction utilitaire.
